# EUROPEAN PATENT SPECIFICATION

(11) **EP 4 198 414 B1**
(45) Date of publication and mention of the grant of the patent: **14.05.2025**
(21) Application number: 22212703.7
(22) Date of filing: 12.12.2022
(51) Int. Cl.: F24T 10/13

(54) **METHOD FOR INSTALLATION OF GROUND SOURCE HEAT PIPE**
VERFAHREN ZUR INSTALLATION VON ERDWÄRMEROHREN
PROCÉDÉ POUR L'INSTALLATION DE CALODUCS GÉOTHERMIQUES

(30) Priority: 14.12.2021 FI 20216276
(43) Date of publication of application: 21.06.2023
(73) Proprietor: Telapari Oy, 39160 Julkujärvi (FI)
(72) Inventor: Takala, Antti, 39160 Julkujärvi (FI)
(74) Representative: Kolster Oy Ab

(56) References cited:
- EP-A2- 1 006 322
- WO-A2-2011/126359
- JP-A- 2002 303 088
- JP-A- 2006 263 523

## Description

### Background of the invention

The invention relates to the installation of ground source heat pipes and particularly to the installation of ground source heat pipes into soil i.e. into the loose soil layer, excluding drilling into bedrock.

The problem with the above-described arrangement is that it is challenging to install into the loose soil layer. Previously, there is known a method wherein an open ditch is dug in the soil for placing the ground source heat pipes. Then, this open ditch is covered. On the other hand, there is known a method which is used for installing ground source heat pipes into the bedrock. This method utilises a drill to open an installation hole and, wherein, a drill head is run by means of drilling pipes connected to each other. Pressurised air is led to the opened hole which air pushes loose soil upwards and out of the installation hole. Similarly, the method utilises installation pipes or guide pipes to follow the drill head to the section of the installation hole which is located in the loose soil layer. The guide pipes prevent the open installation hole from collapsing and the opened installation hole can be kept open for the installation of the ground source heat pipes. When the installation hole has been drilled to a desired depth, the drilling pipes are pulled out of the installation hole and, then, the ground source heat pipes are led to the installation hole. There is also a known method wherein the ground source heat pipes are installed inside steel piles installed for the foundation of a building.

The problem with the installation of ground source heat pipes only to the loose soil layer is that the digging of the open ditch requires a lot of land masses to be moved when digging and covering the ditch. On the other hand, the use of a rock drill is poorly applicable to loose soil.

WO 2011/126359 A2 discloses a method for installing ground source heat pipes.

### Brief description of the invention

It is thus the object of the invention to provide a novel method. The method according to the invention is characterised by what is disclosed in the independent claim. Some preferred embodiments of the invention are disclosed in the dependent claims.

The invention is based on getting an installation pipe or a combination of installation pipes deeper into the soil by means of a work machine which leads an opening head to the soil by means of the installation pipes. Ground source heat pipes are fastened with fastening means to follow the opening head, and they can be led to the soil within the same work phase as the installation hole itself is opened. The opening head is provided with a transverse pin in its upper part, which pin is in turn set in a slot open from the bottom, being at the lower end of the installation pipe. When the opening head, installation pipes and ground source heat pipes are in the desired depth, the installation pipes are lifted up, whereby the opening head and the ground source heat pipes remain in the soil.

The opening head can be a screw head which includes at least one screw blade. The work machine rotates and presses the installation pipe or the combination of installation pipes into the soil, whereby the screw head set in the installation pipe makes them sink into the soil. The ground source heat pipes are fastened to the screw head and they can be led to the installation hole in the same work phase as the installation pipe is rotated into the soil. The ground source heat pipes are set into connection with the installation pipe and they follow the rotational motion of the installation pipe. The screw head is connected to the lower end of the installation pipe by means of a pin set in the screw head which pin sets in the slot at the end of the installation pipe. When the screw head, the installation pipe and the ground source heat pipes are in the desired depth, the installation pipe is rotated or joggled in the opposite rotation direction, whereby the installation pipe comes loose from the screw head and the installation pipe can be lifted off the soil. The screw head and the ground source heat pipes remain in the soil.

The opening head can also be a cone head of conical shape with its diameter substantially larger than the diameter of the installation pipe. In this embodiment, the work machine drives the installation pipe and presses the installation pipe or the combination of installation pipes into the soil, whereby the conical head set in the installation pipe makes them sink into the soil. The ground source heat pipes are fastened to the conical head in the same work phase as the installation pipe is driven into the soil. The ground source heat pipes are set into connection with the installation pipe and they follow the installation pipe. The conical head is connected to the lower end of the installation pipe by means of a pin set in the conical head which pin sets in the slot at the end of the installation pipe. When the conical head, the installation pipe and the ground source heat pipes are in the desired depth, the installation pipe is rotated or joggled, whereby the installation pipe comes loose from the conical head and the installation pipe can be lifted up from the soil. The conical head and the ground source heat pipes remain in the soil.

An advantage of the method according to the invention is that the ground source heat pipes can be led to the installation hole in the same work phase as the making of the installation hole itself. The pin of the opening head can be provided with screw threads, with a nut set in which, the opening head can be temporarily fastened to the installation pipe in order to move the installation pipe and the opening head before setting them on the soil surface. This arrangement can help to avoid the falling of the opening head in the transfer phase.

It is also possible to lead the ground source heat pipe in the soil with two work phases. Then, the opening hole is opened as described above and the ground source heat pipes are led to the installation pipe in a different work phase. In this method, not part of the present invention, when leading the ground source heat pipes in the soil, a fastening means fastened to their U loop grabs the opening head, e.g. a pin in it, when the ground source heat pipes are led in the correct depth in the installation pipe. Then, the installation pipes can be lifted up and the opening head and the ground source heat pipes remain in the soil.

### Description of the drawings

The invention is now described in closer detail in connection with some embodiments and with reference to the accompanying drawings, in which:
Fig. 1 schematically shows an arrangement which includes a work machine, an installation pipe or a combination of installation pipes, an opening head and ground source heat pipes.
Fig. 2 schematically shows an installation pipe and an opening head to which at least one screw blade is installed.
Fig. 3 schematically shows an installation pipe and an opening head having its diameter substantially larger from its upper part than the diameter of the installation pipe.

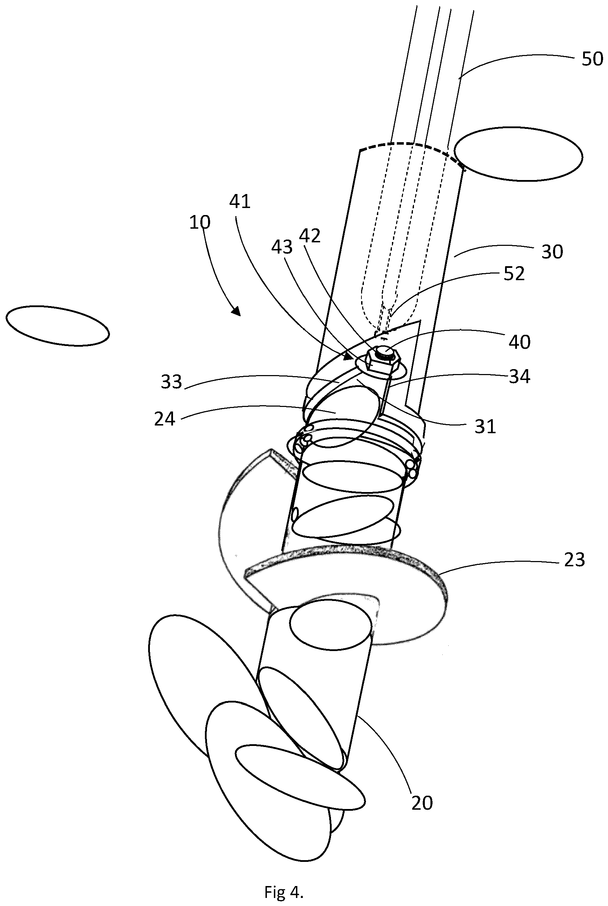

Fig. 4 schematically shows an installation pipe to which is connected an opening head which is fastened to the installation pipe by means of a nut tightened to a pin of the opening head.

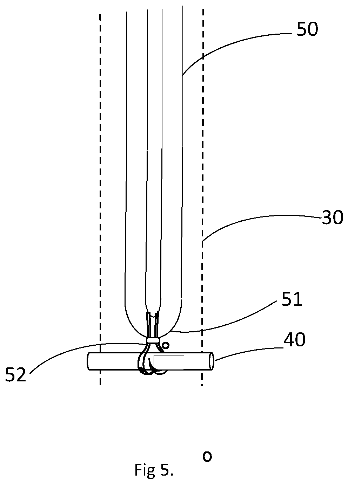

Fig. 5 schematically shows an installation pipe and a U loop of ground source heat pipes set inside of it which is fastened with fastening means to the pin of the opening head.

### Detailed description

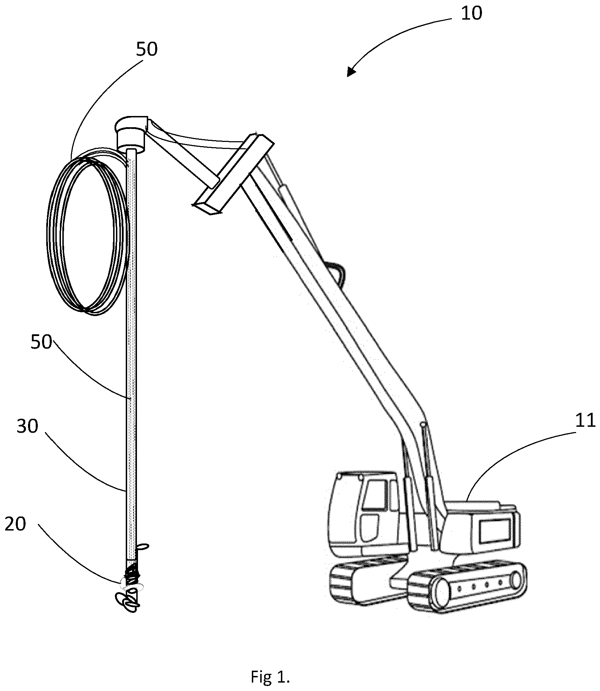

With reference to Fig. 1, means for moving, rotating and driving into soil an installation pipe 30 are connected to a work machine 11. Ground source heat pipes 50 are set into connection with the installation pipe 30 such that some ground source heat pipes 50 are inside the installation pipe 30 fastened to an opening head 20 and some are outside the installation pipe 30. The opening head 20 is connected to the lower end of the installation pipe 30. The work machine 11 takes the opening head 20 and the installation pipe 30 into the soil either by rotating or driving. The surface of the installation pipe 30 is substantially smooth in order to be able to effortlessly lead it to the soil. Substantially, unevennesses in the installation pipe 30 should be smaller than 0.5 mm.

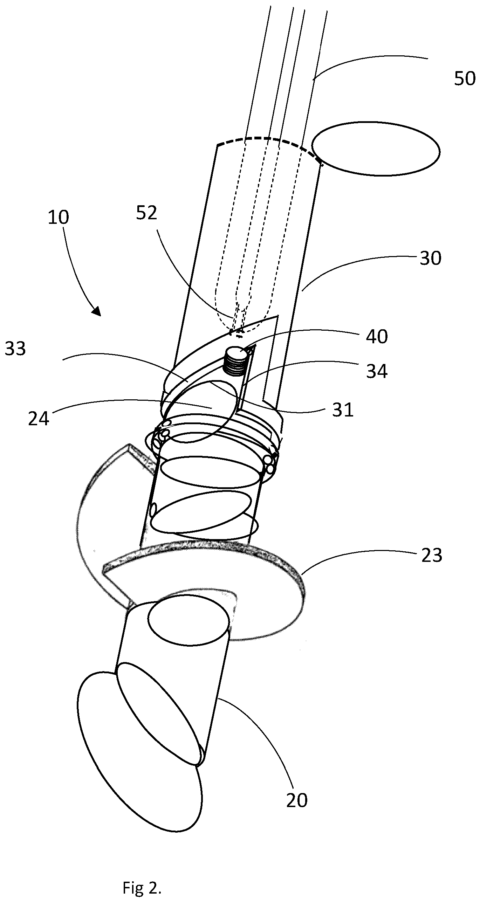

In an embodiment, the opening head 20 is provided with at least one screw blade 23. This is shown in Fig. 2. The work machine 11 rotates and presses the installation pipe 30 into the soil, whereby the opening head 20 provided with the screw blade 23 set in the installation pipe 30 can make them sink into the soil. The ground source heat pipes 50 are fastened to the opening head 20 and they can be led into the installation hole in the same work phase as the installation pipe 30 is rotated into the soil. The ground source heat pipes 50 are set into connection with the upper part of the installation pipe 30 and they follow the rotational motion of the installation pipe 30. The opening head 20 is connected to the lower end of the installation pipe 30 by means of a pin 40 set in the opening head 20, which pin sets in a slot 31 at the end of the installation pipe 30. When the opening head 20, the installation pipe 30 and the ground source heat pipes 50 are in the desired depth, the installation pipe 30 is joggled and rotated in the opposite rotation direction, whereby the installation pipe 30 comes loose from the opening head 20 and the installation pipe 30 can be lifted up from the soil. The opening head 20 and the ground source heat pipes 50 remain in the soil.

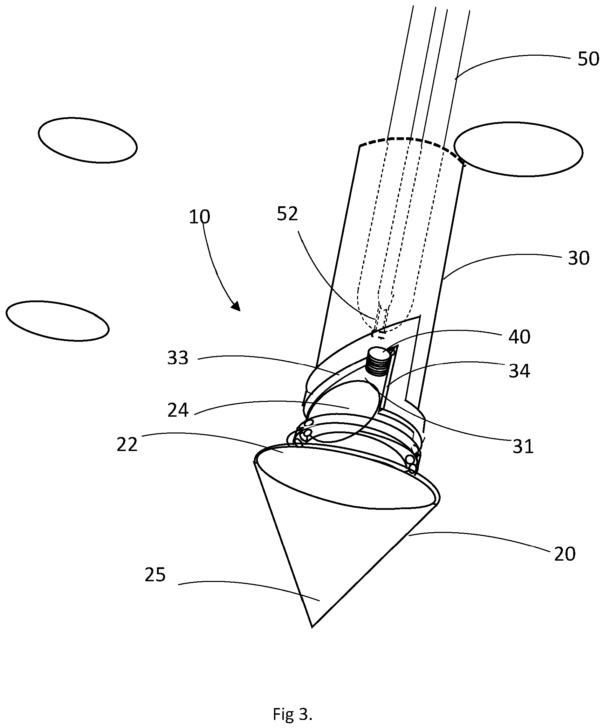

In an embodiment, the opening head 20 can be of the shape of a cone 25 such that its tip forms the lower part of the opening head 20 and the diameter of the upper part of the opening head 20 is substantially larger than the diameter of the installation pipe 30. This is shown in Fig. 3. In this embodiment, the work machine 11 drives the installation pipe 30 into the soil, whereby the opening head 20 set in the installation pipe 30 makes the installation pipe 30 sink into the soil. The ground source heat pipes 50 are fastened to the opening head 20 and they are led into the installation hole in the same work phase as the installation pipe 30 is driven into the soil. The ground source heat pipes 50 are set into connection with the installation pipe 30 and they follow the installation pipe 30. The opening head 20 is connected to the lower end of the installation pipe 30 by means of a pin 40 set in the opening head 20, which pin sets in a slot 31 at the end of the installation pipe 30. When the opening head 20, the installation pipe 30 and the ground source heat pipes 50 are in the desired depth, the installation pipe 30 is joggled and rotated, whereby the installation pipe 30 comes loose from the opening head 20 and the installation pipe 30 can be lifted up from the soil. The opening head 20 and the ground source heat pipes 50 remain in the soil.

In an embodiment, the slot 31 of the installation pipe 30 is manufactured such that the slot 31 widens towards the lower end of the installation pipe 30. The slot 31 is shaped such that, seen in relation to the rotation direction of the installation pipe 30, a rear edge 34 of the slot 31 is straight and a front edge 33 of the slot 31 is bevelled. This is shown in Fig. 2. This ensures that, when the installation pipe 30 is rotated in the opposite direction, the installation pipe 30 comes loose from the opening head 20 and the installation pipe 30 can be lifted up from the soil such that the opening head 20 and the ground source heat pipes 50 remain in the soil.

In an embodiment, the pin 40 of the opening head 20 is provided with screw threads 42, with a nut 43 set in which, the opening head 20 can be temporarily fastened to the installation pipe 30 in order to move the installation pipe 30 and the opening head 20 before setting them on the soil surface. This arrangement can help to avoid the falling of the opening head 20 in the transfer phase.

In an embodiment, it is also possible to set in the installation pipe 30 filling material, such as concrete or crushed stone fines, whereby the ground source heat pipes 50 quickly reach good thermal conductivity in connection with the installation of the ground source heat pipes 50. Then, no air or air pockets remain between the walls of the installation hole and the ground source heat pipes 50 to impede conduction of heat from the soil to the ground source heat pipes 50.

In an embodiment, not part of the present invention, the ground source heat pipes 50 are led into the soil in two work phases. Then, the opening hole is opened as described above and the ground source heat pipes 50 are led into the installation pipe 30 in a different work phase. In this method when leading the ground source heat pipes 50 in the soil, a fastening means 52 fastened to their U loop 51 grabs the opening head 20, e.g. the pin 40 in it, when the ground source heat pipes 50 are led in the correct depth in the installation pipe 30. After that, the installation pipes 30 can be lifted up and the opening head 20 and the ground source heat pipes 50 remain in the soil. In an embodiment, not part of the present invention, the fastening means 52 are hooks set opposite each other. When leading the ground source heat pipes down, at least one of the hooks can be made to grab the pin 40 of the opening head 20.

Those skilled in the art will find it obvious that, as technology advances, the basic idea of the invention can be implemented in many different ways. The invention and its embodiments are thus not restricted to the examples described above but may vary within the scope of the claims.

## Claims

1. A method for installing ground source heat pipes (50), wherein
leading the ground source heat pipes (50) to an installation pipe (30);
fastening the ground source heat pipes (50) to an opening head (20) by means of fastening means (52) before leading the installation pipe (30) into the soil;
setting the installation pipe (30) into connection with the opening head (20), wherein a pin (40) of the opening head (20) is set into a slot (31) of the installation pipe (30);
fastening the installation pipe (30) by means of fastening means (41) to the opening head (20);
lifting the installation pipe (30) to a desired location;
detaching the fastening means (41);
leading the installation pipe (30) into the soil; and
lifting the installation pipe (30) up from the soil such that the opening head (20) remains in the soil.

2. A method according to claim 1, wherein the opening head (20) includes a screw blade (23), whereby leading the installation pipe (30) into the soil by rotating.

3. A method according to claim 1, wherein the opening head (20) includes a cone (25), whereby leading the installation pipe (30) into the soil by driving.

4. A method according to any of previous claims 1-3, comprising a step of setting filling material in the installation pipe (30), after which, the installation pipe (30) is lifted up from the soil.

## Patentansprüche

1. Verfahren zum Installieren von Erdwärmerohren (50), wobei
Führen der Erdwärmerohre (50) zu einem Installationsrohr (30) ;
Befestigen der Erdwärmerohre (50) mittels Befestigungsmitteln (52) an einem Öffnungskopf (20) vor Führen des Installationsrohrs (30) in den Boden;
Einstellen des Installationsrohrs (30) in Verbindung mit dem Öffnungskopf (20), wobei ein Stift (40) des Öffnungskopfes (20) in einen Schlitz (31) des Installationsrohrs (30) eingestellt wird;
Befestigen des Installationsrohrs (30) mittels Befestigungsmitteln (41) am Öffnungskopf (20);
Anheben des Installationsrohrs (30) auf einen gewünschten Ort;
Lösen der Befestigungsmittel (41);
Führen des Installationsrohrs (30) in den Boden; und
Anheben des Installationsrohrs (30) vom Boden, derart, dass der Öffnungskopf (20) im Boden verbleibt.

2. Verfahren nach Anspruch 1, wobei der Öffnungskopf (20) ein Schraubenblatt (23) beinhaltet, wodurch das Installationsrohr (30) durch Drehen in den Boden geführt wird.

3. Verfahren nach Anspruch 1, wobei der Öffnungskopf (20) einen Kegel (25) beinhaltet, wodurch das Installationsrohr (30) durch Treiben in den Boden geführt wird.

4. Verfahren nach einem der vorhergehenden Ansprüche 1 bis 3, das einen Schritt des Einstellens von Füllmaterial im Installationsrohr (30) umfasst, nach dem das Installationsrohr (30) vom Boden abgehoben wird.

## Revendications

1. Procédé pour l'installation de caloducs géothermiques (50), dans lequel :
diriger les caloducs géothermiques (50) vers un tuyau d'installation (30) ;
fixer les caloducs géothermiques (50) à une tête d'ouverture (20) au moyen de moyens de fixation (52) avant de diriger le tuyau d'installation (30) dans le sol ;
placer le tuyau d'installation (30) en raccordement avec la tête d'ouverture (20), dans lequel une broche (40) de la tête d'ouverture (20) est placée dans une fente (31) du tuyau d'installation (30) ;
fixer le tuyau d'installation (30) au moyen de moyens de fixation (41) à la tête d'ouverture (20) ;
soulever le tuyau d'installation (30) jusqu'à un emplacement souhaité ;
détacher les moyens de fixation (41) ;
diriger le tuyau d'installation (30) dans le sol ; et
soulever le tuyau d'installation (30) du sol de sorte que la tête d'ouverture (20) reste dans le sol.

2. Procédé selon la revendication 1, dans lequel la tête d'ouverture (20) comprend une lame hélicoïdale (23), moyennant quoi, diriger le tuyau d'installation (30) dans le sol par rotation.

3. Procédé selon la revendication 1, dans lequel la tête d'ouverture (20) comprend un cône (25), moyennant quoi, diriger le tuyau d'installation (30) dans le sol par entraînement.

4. Procédé selon l'une quelconque des revendications 1 à 3, comprenant une étape consistant à mettre un matériau de remplissage dans le tuyau d'installation (30), après quoi, le tuyau d'installation (30) est soulevé du sol.
